# EUROPEAN PATENT APPLICATION

(11) **EP 3 982 664 A1**
(43) Date of publication of application: **13.04.2022**
(21) Application number: 19931945.0
(22) Date of filing: 06.06.2019
(51) Int. Cl.: H04W 28/04, H04W 72/04

(54) **TERMINAL AND WIRELESS COMMUNICATION METHOD**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); GUO, Shaozhen, Beijing 100190 (CN); WANG, Jing, Beijing 100190 (CN); HOU, Xiaolin, Beijing 100190 (CN)
(74) Representative: Hoffmann Eitle
(86) International application number: PCT/JP2019/022506
(87) International publication number: WO 2020/245973

(57) **Abstract**

A terminal according to one aspect of the present disclosure includes: a control section that determines a last DCI format associated with a specific group index from detected downlink control information (DCI) formats corresponding to transmission of an uplink control channel of a same slot; and a transmitting section that transmits the uplink control channel by using a resource corresponding to the last DCI format. According to one aspect of the present disclosure, HARQ-ACK control can be suitably performed even when multi-TRPs are used.

## Description

### Technical Field

The present disclosure relates to a terminal and a radio communication method in a next-generation mobile communication system.

### Background Art

In a universal mobile telecommunications system (UMTS) network, long term evolution (LTE) has been specified for a higher-speed data rate, low delay, and the like (Non Patent Literature 1). LTE-Advanced (3GPP Rel. 10-14) has been specified for larger capacity and sophistication of LTE (third generation partnership project (3GPP) release (Rel.) 8, 9).

Successor systems to LTE (e.g., also referred to as 5th generation mobile communication system (5G), 5G+ (plus), new radio (NR), and 3GPP Rel. 15 or later) are considered.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In a future radio communication system (e.g., NR), it is considered that one or a plurality of transmission/reception points (TRPs) (multi-TRPs) performs DL transmission to user equipment (UE).

Separate HARQ-ACK feedback and joint HARQ-ACK feedback are considered as one method of hybrid automatic repeat request acknowledgement (HARQ-ACK) feedback in the case where the multi-TRPs are used.

In the separate HARQ-ACK feedback, UE transmits HARQ-ACK for each TRP by using separate physical uplink control channels (PUCCHs). In contrast, in the joint HARQ-ACK feedback, the UE transmits HARQ-ACK for a plurality of TRPs by using one PUCCH.

In contrast, how to determine the PUCCH resources when the joint HARQ-ACK feedback is applied in the case where the above-described multi-TRPs are used has not yet been considered. If HARQ-ACK is not appropriately controlled, spatial diversity gain, high-rank transmission, and the like in the case where multi-TRPs are used cannot be suitably achieved, which may inhibit an increase in communication throughput.

Therefore, one object of the present disclosure is to provide a terminal and a radio communication method capable of suitably performing HARQ-ACK control even when multi-TRPs are used.

### Solution to Problem

A terminal according to one aspect of the present disclosure includes: a control section that determines a last DCI format associated with a specific group index from detected downlink control information (DCI) formats corresponding to transmission of an uplink control channel of a same slot; and a transmitting section that transmits the uplink control channel by using a resource corresponding to the last DCI format.

### Advantageous Effects of Invention

According to one aspect of the present disclosure, HARQ-ACK control can be suitably performed even when multi-TRPs are used.

### Brief Description of Drawings

Figs. 1A to 1D illustrate one example of a multi-TRP scenario.
Fig. 2 illustrates one example of an unexpected case in Rel-15 NR.
Fig. 3 illustrates one example of a "last DCI format" in a second embodiment.
Fig. 4 illustrates another example of the "last DCI format" in the second embodiment.
Fig. 5 illustrates one example of a "last DCI format" in Embodiment 3-1.
Fig. 6 illustrates one example of a "last DCI format" in Embodiment 3-2.
Fig. 7 illustrates one example of a "last DCI format" in Embodiment 3-3.
Fig. 8 illustrates one example of a schematic configuration of a radio communication system according to one embodiment.
Fig. 9 illustrates one example of the configuration of a base station according to one embodiment.
Fig. 10 illustrates one example of the configuration of a user terminal according to one embodiment.
Fig. 11 illustrates one example of the hardware configurations of the base station and the user terminal according to one embodiment.

### Description of Embodiments

### (Multi-TRPs)

In NR, it is considered that one or a plurality of transmission/reception points (TRPs)(multi-TRPs) performs DL transmission to UE by using one or a plurality of panels (multi-panel). It is also considered that UE performs UL transmission to one or a plurality of TRPs.

Note that the plurality of TRPs may correspond to the same cell identifier (ID), or may correspond to different cell IDs. The cell ID may be a physical cell ID or a virtual cell ID.

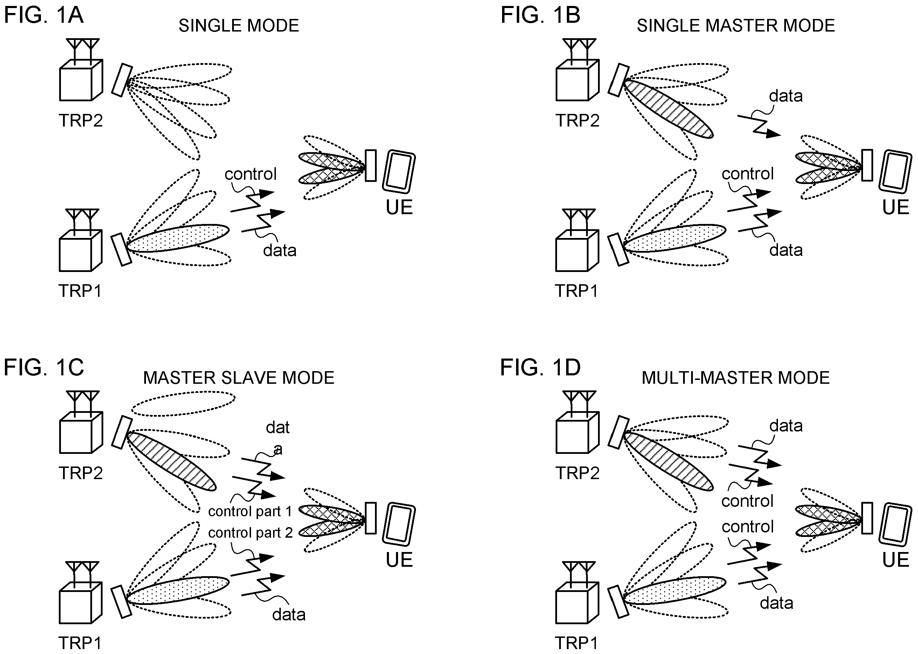

Figs. 1A to 1D illustrate one example of a multi-TRP scenario. Although, in these examples, it is assumed that each TRP can transmit four different beams, the assumption is not a limitation.

Fig. 1A illustrates one example of a case where only a single TRP (TRP 1 in present example) of multi-TRPs performs transmission to UE (which may be referred to as single mode, single TRP, and the like). In the case, the TRP 1 transmits both a control signal (physical downlink control channel (PDCCH)) and a data signal (physical downlink shared channel (PDSCH)) to the UE.

Fig. 1B illustrates one example of a case where only a single TRP (TRP 1 in present example) of the multi-TRPs transmits a control signal to the UE and the multi-TRPs transmit a data signal (which may be referred to as single master mode). The UE receives each PDSCH transmitted from the multi-TRPs based on one piece of downlink control information (DCI).

Fig. 1C illustrates one example of a case where each of the multi-TRPs transmits a part of a control signal to the UE and the multi-TRPs transmit a data signal (which may be referred to as master slave mode). The TRP 1 may transmit a part 1 of a control signal (DCI). The TRP 2 may transmit a part 2 of the control signal (DCI). The part 2 of the control signal may depend on the part 1. The UE receives each PDSCH transmitted from the multi-TRPs based on these parts of the DCI.

Fig. 1D illustrates one example of a case where each of the multi-TRPs transmits separate control signals to the UE and the multi-TRPs transmit a data signal (which may be referred to as multi-master mode). A first control signal (DCI) may be transmitted at the TRP 1. A second control signal (DCI) may be transmitted at the TRP 2. The UE receives each PDSCH transmitted from the multi-TRPs based on the DCI.

When a plurality of PDSCHs (which may be referred to as multiple PDSCHs (multi-PDSCHs)) from the multi-TRPs as illustrated in Fig. 1B is scheduled by using one piece of DCI, the DCI may be referred to as single DCI (single PDCCH). When each of a plurality of PDSCHs from the multi-TRPs as illustrated in Fig. 1D is scheduled by using a plurality of pieces of DCI, the plurality of pieces of DCI may be referred to as multi-DCI (multiple PDCCHs (multi-PDCCHs)).

Such a multi-TRP scenario can perform more flexible transmission control using a high-quality channel.

A different codeword (CW) and a different layer may be transmitted from each TRP of the multi-TRPs. Noncoherent joint transmission (NCJT) is considered as one form of multi-TRP transmission.

In the NCJT, for example, the TRP 1 performs modulation mapping and layer mapping on a first codeword, performs first precoding in a first number of layers (e.g., two layers), and transmits a first PDSCH. The TRP 2 performs modulation mapping and layer mapping on a second codeword, performs second precoding in a second number of layers (e.g., two layers), and transmits a second PDSCH.

Note that a plurality of PDSCHs (multi-PDSCHs) subjected to the NCJT may be defined as partially or completely overlapping at least one of a time domain and a frequency domain. That is, the first PDSCH from a first TRP and the second PDSCH of a second TRP may overlap at least one of time resources and frequency resources.

The first PDSCH and the second PDSCH may be assumed not to be in quasi-co-located (QCL) relation (not to be quasi-co-location (QCL)). Reception of the multi-PDSCHs may be replaced with simultaneous reception of PDSCHs that are not of QCL type D.

### (HARQ-ACK of Multi-TRPs)

Separate HARQ-ACK feedback and joint HARQ-ACK feedback are considered as hybrid automatic repeat request acknowledgement (HARQ-ACK) feedback to multi-PDSCHs.

The separate HARQ-ACK feedback (which may also be referred to as separate HARQ-ACK) corresponds to feedback in which UE transmits HARQ-ACK for each TRP by using separate physical uplink control channel (PUCCH)/physical uplink shared channel (PUSCH) resources. The plurality of PUCCH/PUSCH resources may overlap each other (may be simultaneously transmitted), and is not required to overlap each other.

When the separate HARQ-ACK is used, HARQ-ACK can be independently transmitted for each TRP. Even when the backhaul delay between TRPs is large (e.g., TRPs are connected by non ideal backhaul), the delay of the HARQ does not increase.

The joint HARQ-ACK feedback (which may also be referred to as joint HARQ-ACK) corresponds to feedback in which UE transmits HARQ-ACK of each TRP by using the same PUCCH/PUSCH resources.

When the joint HARQ-ACK is used, one PUCCH/PUSCH transmission is sufficient, so that resource overhead can be reduced. When the backhaul delay between TRPs is small (e.g., TRPs are connected by ideal backhaul), the HARQ-ACK transmitted to one TRP can be delivered to the other TRP with a low delay.

Note that the PUCCH/PUSCH may mean at least one of a PUCCH and a PUSCH (hereinafter, "A/B" may be similarly replaced with "at least one of A and B").

The HARQ-ACK in the present disclosure can be replaced with both the separate HARQ-ACK and the joint HARQ-ACK unless otherwise noted.

One or a plurality of pieces of DCI that schedules the multi-PDSCHs may include a field of a PUCCH resource indicator (PRI). The PRI corresponds to information for designating a resource for transmitting HARQ-ACK corresponding to a PDSCH, and may be referred to as an ACK/NACK resource indicator (ARI).

The UE may determine the PUCCH resource for transmitting the HARQ-ACK corresponding to the above-described multi-PDSCHs based on the PRI.

### (HARQ-ACK Codebook)

In the NR, the UE may transmit the HARQ-ACK feedback by using one PUCCH resource in units of HARQ-ACK codebooks including one or more bits of delivery acknowledgement information (e.g., hybrid automatic repeat request acknowledgement (HARQ-ACK)). The HARQ-ACK bit may be referred to as HARQ-ACK information, a HARQ-ACK information bit, or the like.

Here, the HARQ-ACK codebook may include a bit for HARQ-ACK in units of at least one of a time domain (e.g., slot), a frequency domain (e.g., component carrier (CC)), a spatial domain (e.g., layer and beam), a transport block (TB), and a code block group (CBG) constituting the TB. The HARQ-ACK codebook may be simply referred to as a codebook.

Note that the bit number (size) or the like included in the HARQ-ACK codebook may be determined semi-statically or dynamically. The HARQ-ACK codebook whose size is determined semi-statically is also referred to as a semistatic HARQ-ACK codebook, a type 1 HARQ-ACK codebook, and the like. The HARQ-ACK codebook whose size is determined dynamically is also referred to as a dynamic HARQ-ACK codebook, a type 2 HARQ-ACK codebook, and the like.

The UE may set which of the type 1 HARQ-ACK codebook and the type 2 HARQ-ACK codebook is used by using a higher layer parameter (e.g., pdsch-HARQ-ACK-Codebook).

In the case of the type 1 HARQ-ACK codebook, in a predetermined range (e.g., range set based on higher layer parameter), the UE may feed back a HARQ-ACK bit for a PDSCH candidate (or PDSCH occasion) in the predetermined range regardless of the presence or absence of scheduling of a

### PDSCH.

The predetermined range may be determined based on at least one of a predetermined period (e.g., predetermined number of sets of occasions for receiving candidate PDSCH or predetermined number of monitoring occasions of PDCCH), the number of CCs set or activated in UE, the number of TBs (layer number or rank), the CBG number per one TB, and the presence or absence of application of spatial bundling. The predetermined range is also referred to as a HARQ-ACK window, a HARQ-ACK bundling window, a HARQ-ACK feedback window, and the like.

In the type 1 HARQ-ACK codebook, even when scheduling of a PDSCH for UE is not performed, the UE secures a bit for the PDSCH in the codebook in the predetermined range. When it is determined that the PDSCH has not been actually scheduled, the UE may feed back the bit as a NACK bit.

In contrast, in the case of the type 2 HARQ-ACK codebook, the UE may feed back a HARQ-ACK bit for a scheduled PDSCH in the above-described predetermined range.

Specifically, the UE may determine the bit number of the type 2 HARQ-ACK codebook based on a predetermined field (e.g., downlink assignment indicator (index)(DAI) field) in DCI. The DAI field may include at least one of, for example, a counter DAI (C-DAI) and a total DAI (T-DAI).

The C-DAI may indicate a counter value of downlink transmission (PDSCH, data, and TB) scheduled within a predetermined period. For example, the C-DAI in DCI for scheduling data within the predetermined period may indicate the number counted first in a frequency domain (e.g., CC) and then in a time domain in the predetermined period. For example, the C-DAI may correspond to a value obtained by counting PDSCH receptions or semi-persistent scheduling (SPS) releases in ascending order of serving cell indices and then in ascending order of PDCCH monitoring occasions regarding one or more pieces of DCI included in the predetermined period.

That is, the C-DAI may mean the cumulative number of pairs of {serving cells and PDCCH monitoring occasions} for each piece of data up to the current serving cell and the current PDCCH monitoring occasion.

The T-DAI may indicate a total value (total number) of pieces of data scheduled within a predetermined period. For example, the T-DAI in DCI for scheduling data in a certain time unit (e.g., PDCCH monitoring occasion) within the predetermined period may indicate the total number of pieces of data scheduled up to the time unit (also referred to as point, timing, and the like) within the predetermined period.

That is, the T-DAI may mean a value which corresponds to the total number of pairs of {serving cells and PDCCH monitoring occasions} for each piece of data up to the current PDCCH monitoring occasion and which is updated for each PDCCH monitoring occasion.

In Rel-15 NR, it is specified that UE does not expect to detect two or more DCI formats of a plurality of PDCCHs in which a first symbol is received in the same symbol in a certain slot (in other words, which starts in the same symbol). The two or more DCI formats schedules PDSCH receptions or SPS PDSCH releases in the same cell, and gives an instruction to transmit corresponding HARQ-ACK in the same slot.

Note that the two or more DCI formats may be the same or different.

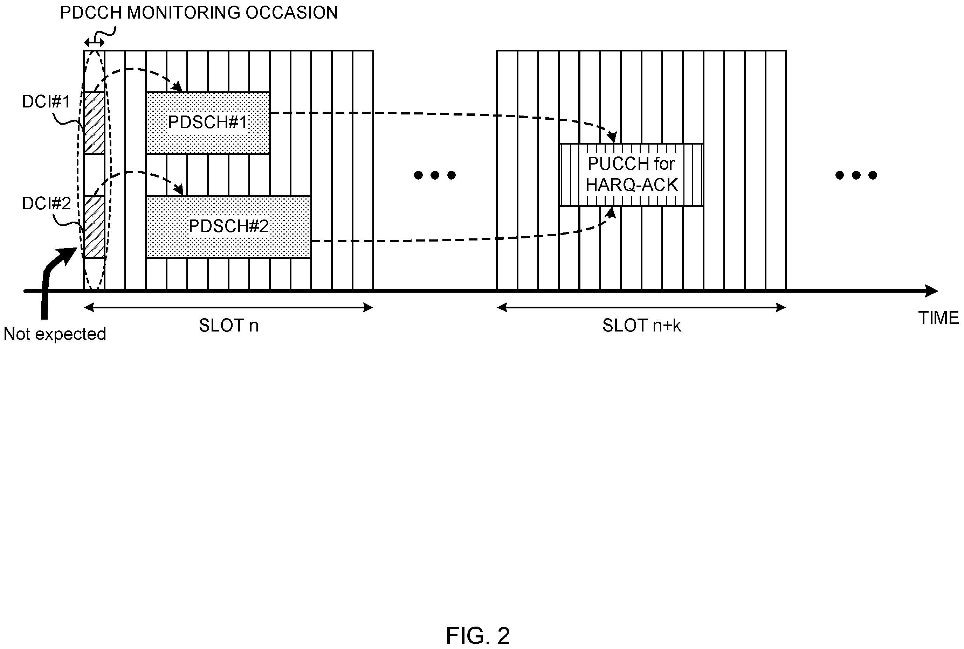

Fig. 2 illustrates one example of an unexpected case in the Rel-15 NR. In the example, DCI #1 transmitted in a symbol #0 of a slot n schedules a PDSCH #1, and corresponding PUCCH resources for HARQ-ACK is scheduled in a slot n+k. DCI #2 transmitted in the symbol #0 of the same slot n schedules a PDSCH #2, and corresponding PUCCH resources for HARQ-ACK is scheduled in the slot n+k.

Note that the PDSCHs #1 and #2 may be started from the same symbol, or may be started from different symbols (the same applies to the following drawings).

Transmission timing of HARQ-ACK to a PDSCH (which may be referred to as PDSCH-to-HARQ feedback timing, K1, and the like) may be identified by a PDSCH-to-HARQ feedback timing indicator field included in DCI for scheduling the PDSCH (e.g., DCI format 1_0/1_1). When the last slot that has received a PDSCH is defined as n, it means that UE transmits HARQ-ACK for the PDSCH in an n+K1 slot.

Note that the above-described PDSCH-to-HARQ feedback timing may be designated not in a slot unit but in, for example, a subslot unit.

UE compliant with the Rel-15 NR does not expect to simultaneously detect the DCI #1 and #2 in Fig. 2.

In the Rel-15 NR, PUCCH resources for transmitting HARQ-ACK in a certain slot are specified to be determined based on a PRI included in the last DCI format among DCI formats having a value of the PDSCH-to-HARQ feedback timing indicator field indicating PUCCH transmission of the slot (e.g., DCI format 1_0/1_1).

In the Rel-15 NR, the "last DCI format" means the last DCI format in the case where detected DCI formats corresponding to PUCCH transmission in the same slot are indexed in ascending order over serving cells in the same PDCCH monitoring occasion (PMO), and indexed in ascending order over indices of the PDCCH monitoring occasion (in other words, DCI format corresponding to largest index).

In other words, the "last DCI format" corresponds to the last DCI format in which the detected DCI formats corresponding to PUCCH transmission in the same slot are arranged in order from a more foregoing (smaller) CC index and a more foregoing (smaller) PDCCH monitoring period. Such DCI indexing for determining the PUCCH resources corresponds to indexing in order of the first frequency domain and the second time domain.

In contrast, how to determine the PUCCH resources when the joint HARQ-ACK feedback is applied in the case where the above-described multi-TRPs are used has not yet been considered.

For example, although it is considered that UE is notified of an index for each TRP (which may be referred to as index associated with TRP, TRP index, and the like) for multi-TRPs, how to use such notification operation has not yet been sufficiently considered.

If HARQ-ACK is not appropriately controlled, spatial diversity gain, high-rank transmission, and the like in the case where multi-TRPs are used cannot be suitably achieved, which may inhibit an increase in communication throughput.

Therefore, the present inventors have conceived HARQ-ACK control capable of addressing a case where multi-TRPs are used.

Embodiments according to the present disclosure will be described in detail below with reference to the drawings. Radio communication methods according to the respective embodiments may be applied independently, or may be applied in combination.

Note that, in the present disclosure, a panel, an uplink (UL) transmission entity, a TRP, spatial relation, a control resource set (CORESET), a PDSCH, a codeword, a base station, a predetermined antenna port (e.g., demodulation reference signal (DMRS) port), a predetermined antenna port group (e.g., DMRS port group), a predetermined group (e.g., code division multiplexing (CDM) group, predetermined reference signal group, and CORESET group), and the like may be replaced with each other.

A panel identifier (ID) and a panel may be replaced with each other. That is, a TRP ID and a TRP, a CORESET group ID and a CORESET group, and the like may be replaced with each other. An ID and an index may be replaced with each other.

The "group" in the present disclosure may be replaced with grouping, a sequence, a list, a set, and the like.

In the present disclosure, NCJT, NCJT using multi-TRPs, multi-PDSCHs using NCJT, multi-PDSCHs, a plurality of PDSCHs from the multi-TRPs, and the like may be replaced with each other.

The following PUCCH may be replaced with a PUSCH.

Note that, in the present disclosure, an index for each TRP, a TRP index, a higher layer signaling index for each CORESET, an index for each CORESET, a CORESET index, a CORESET-related index, a CORESET group ID, an index related to a TRP and HARQ-ACK (PUCCH), an index related to CORESET and HARQ-ACK (PUCCH), a codebook-related index, a codebook index, and the like may be replaced with each other.

The "two DCI formats" of the present disclosure may be replaced with "two or more DCI formats".

In the present disclosure, each of "assumption 1" and "assumption 2" may mean the following assumption.

In the assumption 1, it is assumed that UE does not expect to detect two DCI formats of a plurality of PDCCHs in which a first symbol is received in the same symbol in a certain slot (in other words, which starts in the same symbol). The two DCI formats schedules PDSCH receptions or SPS PDSCH releases in the same cell, and gives an instruction to transmit corresponding HARQ-ACK in the same slot. That is, the assumption 1 corresponds to assumption related to simultaneous reception of two DCI formats in the Rel-15 NR.

In the assumption 2, it is assumed that UE permits to detect two DCI formats of a plurality of PDCCHs in which a first symbol is received in the same symbol in a certain slot. The two DCI formats schedules PDSCH receptions or SPS PDSCH releases in the same cell, corresponds to a CORESET associated with different TRPs of the two DCI formats (e.g., different CORESET groups and different CORESET group IDs), and gives an instruction to transmit corresponding HARQ-ACK in the same slot.

### (Radio Communication Method)

### <First Embodiment>

In a first embodiment, even when the joint HARQ-ACK feedback is applied in the case where multi-TRPs are used, UE uses the same PUCCH resource determination mechanism as that in the Rel-15 NR.

That is, even when the joint HARQ-ACK feedback is applied in the case where multi-TRPs are used, the UE may determine PUCCH resources for transmitting HARQ-ACK in a certain slot based on a PRI included in the last DCI format among the DCI formats having a value of a PDSCH-to-HARQ feedback timing indicator field indicating PUCCH transmission of the slot.

Here, the "last DCI format" may mean the last DCI format in the case where detected DCI formats corresponding to PUCCH transmission in the same slot are indexed in ascending order over serving cells in the same PDCCH monitoring occasion, and indexed in ascending order over indices of the PDCCH monitoring occasion (in other words, DCI format corresponding to largest index).

In the first embodiment, the UE may assume that a CORESET group ID is not used (or not applied) for the joint HARQ-ACK feedback. In other words, even when a parameter in a TRP direction such as the CORESET group ID is set, the UE may determine PUCCH resources of the joint HARQ-ACK feedback without using the parameter.

The first embodiment may be applicable only to the assumption 1.

According to the above-described first embodiment, the UE can appropriately determine the "last DCI format" related to PUCCH resource determination.

Note that, in the present disclosure, the PUCCH resources are only required to be determined based on the last DCI format (e.g., any field of last DCI format, radio network temporary identifier (RNTI), resources, and corresponding DMRS), and are not limited to be determined based on a PRI included in the last DCI format. In the subsequent determinations of the PUCCH resources, the "PRI included in the last DCI format" may be replaced with the "last DCI format".

### <Second Embodiment>

In a second embodiment, the PUCCH resources may be determined based on the last DCI format associated with a specific CORESET group ID. For example, UE may determine the corresponding last DCI format for each CORESET group ID for detected DCI, and then determine one DCI format used for PUCCH resource determination from a plurality of last DCI formats determined in accordance with a predetermined rule.

Note that the UE may be notified of the correspondence between a PUCCH (or CORESET or DCI format) and a CORESET group ID by higher layer signaling, physical layer signaling (e.g., DCI), or a combination thereof. For example, the UE may be set with an index related to a PUCCH (e.g., PUCCH resource ID) or a CORESET group ID associated with a CORESET ID. The UE may determine a CORESET group corresponding to a received DCI (PDCCH) based on the correspondence.

Note that the correspondence between a TRP and a CORESET group may be set by the UE by higher layer signaling, or may be predetermined by a specification.

Note that, in the present disclosure, the higher layer signaling may be, for example, any of radio resource control (RRC) signaling, medium access control (MAC) signaling, and broadcast information, or a combination thereof.

The MAC signaling may use, for example, a MAC control element (MAC CE), a MAC protocol data unit (PDU), and the like. The broadcast information may be, for example, a master information block (MIB), a system information block (SIB), remaining minimum system information (RMSI), other system information (OSI), and the like.

The UE may be set with different scrambling IDs in a first CORESET group and a second CORESET group. In the case, even if time frequency resources overlap each other in a CORESET belonging to the first CORESET group and a CORESET belonging to the second CORESET group, the UE can appropriately determine a CORESET group (eventually, corresponding TRP) corresponding to a CORESET that has detected DCI based on a scrambling ID corresponding to the

### CORESET.

The UE may classify detected one or more pieces of DCI (e.g., DCI for scheduling) into two groups based on a CORESET group ID. The last DCI format may be determined based on a rule similar to that in the Rel-15 NR in a group of pieces of DCI associated with each CORESET group ID.

Note that, in this group (which may be referred to as a PDCCH group, a DCI group, and the like), the UE may assume that values of a C-DAI and a T-DAI are determined in accordance with a predetermined rule. That is, the value of each DAI may be independently counted up for each PDCCH group.

Only a PDCCH related to scheduling may be included in the PDCCH group. The PDCCH related to scheduling may be a PDCCH related to at least one of DCI for scheduling a PDSCH, DCI for activating (triggering) an SPS PDSCH, and DCI indicating SPS release.

In the present disclosure, the PDCCH group and the CORESET group may be replaced with each other.

In the second embodiment, the last DCI format associated with a specific CORESET group ID for determining PUCCH resources may be, for example, the last DCI format associated with the smallest or largest CORESET group ID.

In the second embodiment, the last DCI format associated with a specific CORESET group ID for determining PUCCH resources may be a DCI format of later (in other words, newer) PDCCH monitoring occasion or earlier (in other words, older) PDCCH monitoring occasion among the last DCI formats associated with any CORESET group ID.

Note that, when the last DCI formats of a plurality of CORESET group IDs are transmitted in the same PDCCH monitoring occasion, the last DCI format associated with a specific CORESET group ID for determining PUCCH resources may be the last DCI format associated with the smallest or largest CORESET group ID in the PDCCH monitoring occasion.

That is, when the joint HARQ-ACK feedback is applied in the case where multi-TRPs are used, the UE may determine PUCCH resources for transmitting HARQ-ACK in a certain slot based on a PRI included in the last DCI format associated with a specific CORESET group ID (minimum or maximum CORESET group ID) among the DCI formats having a value of a PDSCH-to-HARQ feedback timing indicator field indicating PUCCH transmission of the slot.

Here, the "last DCI format" associated with a certain CORESET group ID is associated with the CORESET group ID, and may mean the last DCI format in the case where detected DCI formats corresponding to PUCCH transmission in the same slot are indexed in ascending order over serving cells in the same PDCCH monitoring occasion, and indexed in ascending order over indices of the PDCCH monitoring occasion (in other words, DCI format corresponding to largest index).

In the second embodiment, the UE may assume that a CORESET group ID is used (or applied) for the joint HARQ-ACK feedback. In other words, when a parameter in the TRP direction is set, the UE may determine PUCCH resources of the joint HARQ-ACK feedback by using the parameter.

The second embodiment may be applicable to one or both of the assumptions 1 and 2.

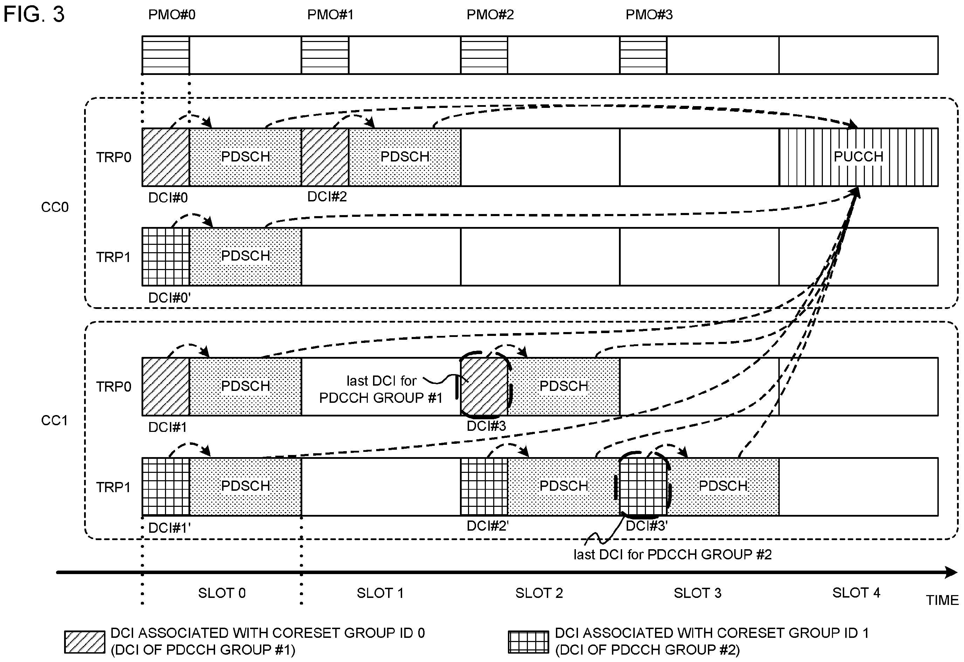

Fig. 3 illustrates one example of the "last DCI format" in the second embodiment. In the example, the UE is set with two serving cells (CC 0 and CC 1). The UE is set to operate at multi-TRPs (TRPs 0 and 1) for each cell.

In Fig. 3, PDSCHs scheduled by each DCI and PUCCHs corresponding to the PDSCHs are indicated by broken lines. Note that the DCI in Fig. 3 and the subsequent drawings may be replaced with DCI formats 1_0 and 1_1, and the like.

In a slot 0 of CC 0, the UE receives DCI from the TRP 0, and receives a PDSCH based on the DCI. In a slot 1 of CC 0, the UE receives DCI from the TRP 0, and receives a PDSCH based on the DCI.

In the slot 0 of CC 1, the UE receives DCI from the TRP 0, and receives a PDSCH based on the DCI. In a slot 2 of CC 1, the UE receives DCI from the TRP 0, and receives a PDSCH based on the DCI.

In the example, DCI of each CC (CCs 0 and 1) transmitted at the TRP 0 is all associated with the CORESET group ID 0, and corresponds to the PDCCH group #1. The UE may determine, from a CORESET group ID 0, that reception from the TRP 0 has been performed.

In the slot 0 of CC 0, the UE receives DCI from the TRP 1, and receives a PDSCH based on the DCI.

In the slot 0 of CC 1, the UE receives DCI from the TRP 1, and receives a PDSCH based on the DCI. In the slot 2 of CC 1, the UE receives DCI from the TRP 1, and receives a PDSCH based on the DCI. In a slot 3 of CC 1, the UE receives DCI from the TRP 1, and receives a PDSCH based on the DCI.

In the example, DCI of each CC (CCs 0 and 1) transmitted at the TRP 1 is all associated with a CORESET group ID 1, and corresponds to a PDCCH group #2. The UE may determine, from the CORESET group ID 1, that reception from the TRP 1 has been performed.

In Fig. 3, it is assumed that a PUCCH corresponding to DCI received in slots 0 to 3 is transmitted in a slot 4 of CC 0. For example, the UE may transmit DCI of a PDCCH group #1 of the slots 0 to 3 and a PUCCH corresponding to the PDCCH group #2 to the TRP 0 in the slot 4 of CC 0.

Note that the CC that transmits a PUCCH is not limited to CC 0, and may be CC 1 depending on setting or the like. Note that the TRP that transmits a PUCCH is not limited to the TRP 0, and may be the TRP 1 depending on setting or the like. A PUCCH may be transmitted by using not a slot but a subslot.

Here, the UE may be notified of the correspondence between a PUCCH (or CORESET or DCI format) and a subslot corresponding to the PUCCH by higher layer signaling, physical layer signaling, or a combination thereof. For example, the UE may be set with an index related to a PUCCH (e.g., PUCCH resource ID) or a CORESET group ID associated with a CORESET ID. The UE may determine a subslot corresponding to a received DCI (PDCCH) based on the correspondence.

For example, it is assumed that the UE sets n symbols (n is integer) from the head of a slot as a subslot #0, and the other symbols (e.g., 14-n symbols from the end) as a subslot #1. Note that such configuration of a subslot (symbol corresponding to subslot) may be set by higher layer signaling, or may be predetermined by a specification.

It may be assumed that, when DCI for scheduling a PDSCH (eventually, PUCCH corresponding to the PDSCH) is detected, the UE transmits a PUCCH to the first TRP if the PUCCH resources are included in the subslot #1. It may be assumed that, when the PUCCH resources are included in a subslot #2, the UE transmits a PUCCH to the second TRP. Note that the correspondence between a TRP and a subslot may be set by higher layer signaling, or may be predetermined by a specification.

Note that the correspondence between a TRP and PUCCH transmission timing (e.g., subslot index) may be set by higher layer signaling.

Fig. 3 illustrates indices (which are attached in ascending order over serving cells (CCs 0 and 1) in the same PDCCH monitoring occasion, and attached in ascending order over indices (PMOs #0 to #3) of PDCCH monitoring occasion for each CORESET group ID) regarding the "last DCI format" associated with each CORESET group ID.

For example, #0 to #3 (DCI #0 to #3) are indicated for the DCI of the CORESET group ID 0. Furthermore, #0' to #3' (DCI #0' to #3') are indicated for the DCI of the CORESET group ID 1. That is, in the example, the last DCI format of the CORESET group ID 0 (TRP 0) is the DCI #3, and the last DCI format of the CORESET group ID 1 (TRP 1) is the DCI #3'.

When the "last DCI format" for PUCCH resource determination is based on the smallest CORESET group ID, the UE may determine the PUCCH resources based on a PRI of the DCI #3 corresponding to the CORESET group ID 0.

When the "last DCI format" for PUCCH resource determination is based on the largest CORESET group ID, the UE may determine the PUCCH resources based on a PRI of the DCI #3' corresponding to the CORESET group ID 1.

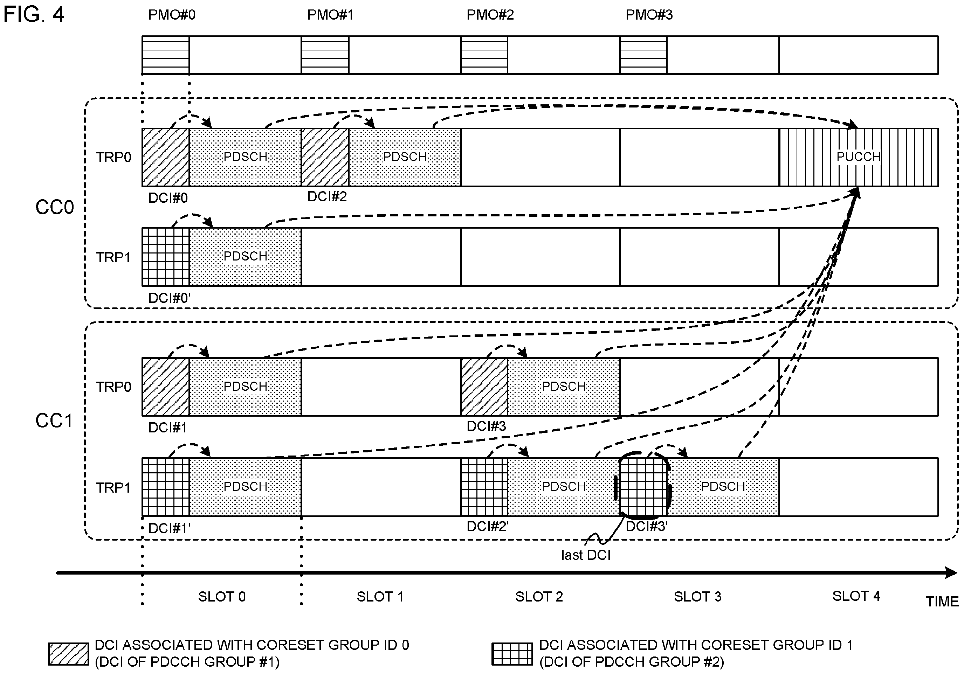

Fig. 4 illustrates another example of the "last DCI format" in the second embodiment. Since the example illustrates the same case as that in Fig. 3, overlapping description will not be repeated.

In Fig. 4, the UE determines the last DCI format associated with a specific CORESET group ID for determining PUCCH resources as a DCI format of later PDCCH monitoring occasion among the last DCI formats associated with any CORESET group ID.

That is, in the example, the UE may determine PUCCH resources based on a PRI of the DCI #3' (DCI #3' since DCI #3 is PMO #2 and DCI #3' is PMO #3) of later PDCCH monitoring occasion among the DCI #3 and the DCI #3'. The DCI #3 is the last DCI format of the CORESET group ID 0 (TRP 0). The DCI #3' is the last DCI format of the CORESET group ID 1 (TRP 1).

According to the above-described second embodiment, the UE can appropriately determine the "last DCI format" related to PUCCH resource determination.

### <Third Embodiment>

In a third embodiment, the PUCCH resources may be determined based on the last DCI format associated with a specific CORESET group ID. For example, the UE may determine the last DCI format in accordance with a predetermined rule for detected DCI. The last DCI format is first determined for each CORESET group in the second embodiment, whereas the last DCI format is determined over CORESET groups in the third embodiment.

In the third embodiment, DCI indexing for determining PUCCH resources may be performed in order in which three directions of a frequency domain, a time domain, and a TRP domain (which may be referred to as CORESET group domains) are applied in any priority order.

The following illustrates Embodiments 3-1 to 3-3:
(Embodiment 3-1) Detected DCI is indexed in order of the first of the TRP domain, the second of the frequency domain, and the third of the time domain;
(Embodiment 3-2) Detected DCI is indexed in order of the first of the frequency domain, the second of the TRP domain, and the third of the time domain; and
(Embodiment 3-3) Detected DCI is indexed in order of the first of the frequency domain, the second of the time domain, and the third of the TRP domain.

Note that the order of the domains may be changed as described above, and for example, the frequency domain and the time domain may be interchanged with each other.

In the third embodiment, the UE may assume that a CORESET group ID is used (or applied) for the joint HARQ-ACK feedback. In other words, when a parameter in the TRP direction is set, the UE may determine PUCCH resources of the joint HARQ-ACK feedback by using the parameter.

The third embodiment may be applicable to one or both of the assumptions 1 and 2.

### [Embodiment 3-1]

In Embodiment 3-1, the "last DCI format" means the last DCI format in the case where detected DCI formats corresponding to PUCCH transmission in the same slot are indexed in ascending order over CORESET group IDs in the same serving cell index and the same PDCCH monitoring occasion, indexed in ascending order over serving cells in the same PDCCH monitoring occasion, and then indexed in ascending order over indices of the PDCCH monitoring occasion (in other words, DCI format corresponding to largest index).

In other words, the "last DCI format" corresponds to the last DCI format in which the detected DCI formats corresponding to PUCCH transmission in the same slot are arranged in order from a smaller CORESET group ID, a more foregoing (smaller) CC index, and a more foregoing (smaller) PDCCH monitoring period.

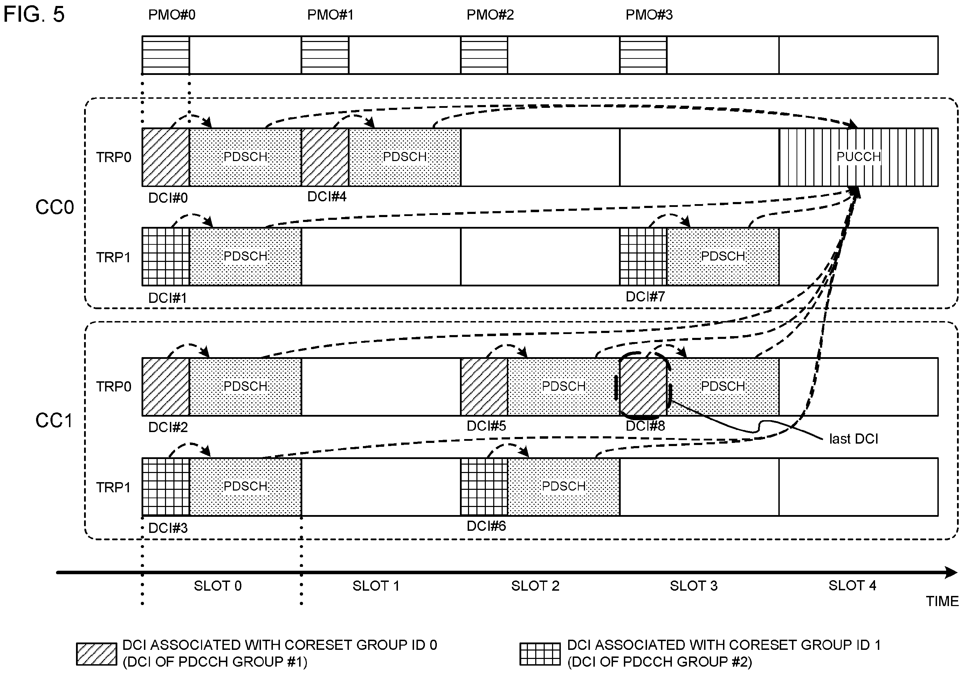

Fig. 5 illustrates another example of the "last DCI format" in Embodiment 3-1. Since the example illustrates a case similar to that in Fig. 3 (slot that receives DCI is somewhat different), overlapping description will not be repeated.

Fig. 5 illustrates indices (which are attached in ascending order over CORESET group IDs (CORESET group IDs 0 and 1) regarding the same serving cell index and the same PDCCH monitoring occasion, attached in ascending order over serving cell indices (CCs 0 and 1) regarding the same PDCCH monitoring occasion, and attached in ascending order over indices (PMOs #0 to #3) of the PDCCH monitoring occasion) regarding the "last DCI format".

According to the indexing, for example, first for CC 0 of the PMO #0, DCI of the CORESET group ID 0 is determined as DCI #0, and DCI of a CORESET group ID 1 is determined as DCI #1. For CC 1 of the PMO #0, DCI of the CORESET group ID 0 is determined as DCI #2, and DCI of the CORESET group ID 1 is determined as DCI #3.

In the example, the UE determines DCI (DCI #8) transmitted from the TRP 0 in CC 1 of the slot 3 (In other words, DCI corresponding to CORESET group ID 0) as the last DCI format. The UE may determine PUCCH resources of the slot 4 based on a PRI of the last DCI format.

Note that, in Embodiment 3-1, the UE may assume that DCI in a specific PDCCH monitoring occasion among pieces of DCI indicating PUCCH transmission of the same slot includes a PRI field of less than three bits or no PRI field (PRI field of 0 bits). For example, when DCI corresponding to K1 = X (X > 0) is received, the UE may assume that DCI corresponding to a value of K1 of X or more has a PRI field of 0 bits regarding detected DCI corresponding to PUCCH transmission of the same slot as PUCCH transmission of the

### DCI.

This is because, since the "last DCI format" is selected from pieces of DCI corresponding to a larger PMO index according to Embodiment 3-1, a small PMO index, which is less likely to be the last DCI format, causes no problem even if the PMO index includes no PRI. When all pieces of DCI corresponding to a larger PMO are erroneously detected, DCI corresponding to a small PMO may be the last DCI format. When a plurality of pieces of DCI corresponding to the larger PMO is transmitted, however, it is highly unlikely that all the pieces of DCI are erroneously detected.

Therefore, when the indexing of Embodiment 3-1 is adopted, the PRI field, which is always included by three bits in the DCI format 1_0/1_1 in the existing Rel-15 NR, may be reduced in relation to DCI of a specific PMO. In the case, the error rate of the DCI in which the PRI field is reduced can be improved, and improvement of communication throughput can be expected.

### [Embodiment 3-2]

In Embodiment 3-2, the "last DCI format" means the last DCI format in the case where detected DCI formats corresponding to PUCCH transmission in the same slot are indexed in ascending order over serving cell indices in the same CORESET group ID and the same PDCCH monitoring occasion, indexed in ascending order over CORESET group IDs in the same PDCCH monitoring occasion, and then indexed in ascending order over indices of the PDCCH monitoring occasion (in other words, DCI format corresponding to largest index).

In other words, the "last DCI format" corresponds to the last DCI format in which the detected DCI formats corresponding to PUCCH transmission in the same slot are arranged in order from a smaller CORESET group ID, a more foregoing (smaller) CC index, and a more foregoing (smaller) PDCCH monitoring period.

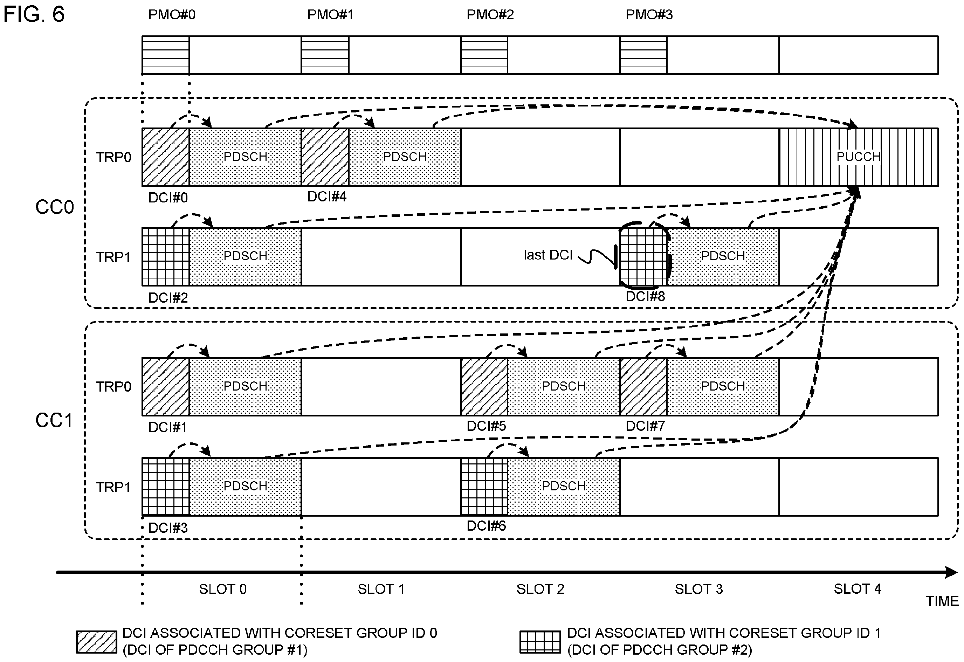

Fig. 6 illustrates one example of the "last DCI format" in Embodiment 3-2. Since the example illustrates a case similar to that in Fig. 5, overlapping description will not be repeated.

Fig. 6 illustrates indices (which are attached in ascending order over serving cell indices (CCs 0 to 1) in the same CORESET group ID and the same PDCCH monitoring occasion, attached in ascending order over CORESET group IDs (CORESET group IDs 0 to 1) in the same PDCCH monitoring occasion, and attached in ascending order over indices (PMOs #0 to #3) of the PDCCH monitoring occasion) regarding the "last DCI format".

According to the indexing, for example, first for the CORESET group ID 0 of the PMO #0, DCI of CC 0 is determined as DCI #0, and DCI of CC 1 is determined as DCI #1. For the CORESET group ID 1 of the PMO #0, DCI of CC 0 is determined as DCI #2, and DCI of CC 1 is determined as DCI #3.

In the example, the UE determines DCI (DCI #8) transmitted from the TRP 1 in CC 0 of the slot 3 as the last DCI format. The UE may determine PUCCH resources of the slot 4 based on a PRI of the last DCI format.

Note that, in Embodiment 3-2, the UE may assume that DCI in a specific PDCCH monitoring occasion among pieces of DCI indicating PUCCH transmission of the same slot includes a PRI field of less than three bits or no PRI field (PRI field of 0 bits). Since this has also been described in Embodiment 3-1, overlapping description will not be repeated.

### [Embodiment 3-3]

In Embodiment 3-3, the "last DCI format" means the last DCI format in the case where detected DCI formats corresponding to PUCCH transmission in the same slot are indexed in ascending order over serving cell indices in the same CORESET group ID and the same PDCCH monitoring occasion, indexed in ascending order over indices of the PDCCH monitoring occasion in the same CORESET group ID, and then indexed in ascending order over the CORESET group IDs (in other words, DCI format corresponding to largest index).

In other words, the "last DCI format" corresponds to the last DCI format in which the detected DCI formats corresponding to PUCCH transmission in the same slot are arranged in order from a smaller CORESET group ID, a more foregoing (smaller) PDCCH monitoring period, and a more foregoing (smaller) CC index.

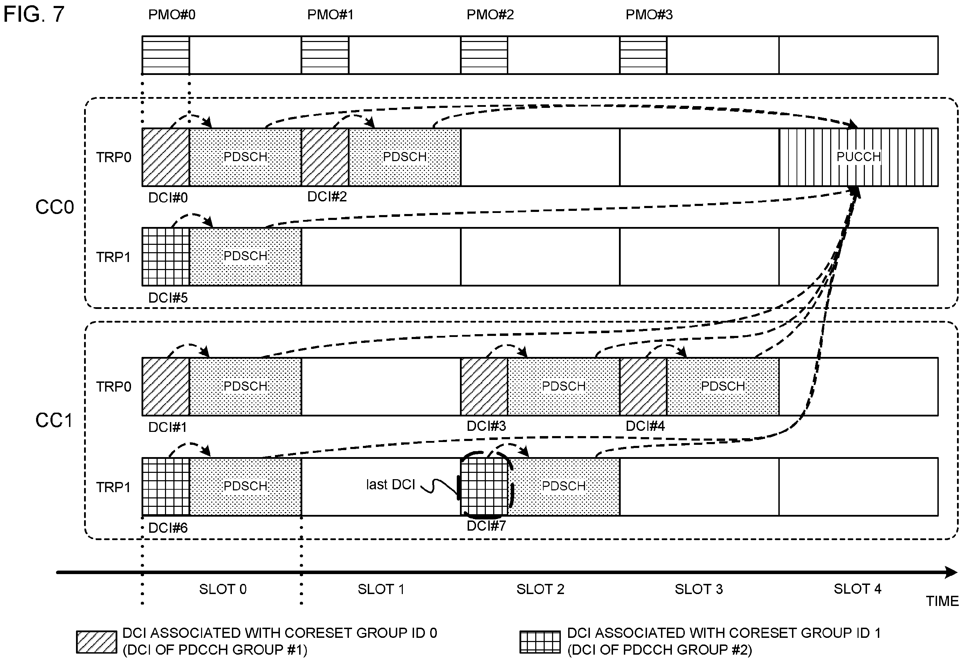

Fig. 7 illustrates one example of the "last DCI format" in Embodiment 3-3. Since the example illustrates a case similar to that in Fig. 5 (slot that receives DCI is somewhat different. Specifically, UE does not receive DCI from the TRP 1 in CC 0 of PMO #3 as compared with the case in Fig. 5), overlapping description will not be repeated.

Fig. 7 illustrates indices (which are attached in ascending order over serving cell indices (CCs 0 to 1) in the same CORESET group ID and the same PDCCH monitoring occasion, attached in ascending order over indices (PMOs #0 to #3) of the PDCCH monitoring occasion in the same CORESET group ID, and attached in ascending order over CORESET group IDs (CORESET group IDs 0 and 1) of the PDCCH monitoring occasion) regarding the "last DCI format".

According to the indexing, for example, first for the CORESET group ID 0, DCI of CC 0 of the PMO #0 is determined as DCI #0, DCI of CC 1 of the PMO #0 is determined as DCI #1, DCI of CC 0 of the PMO #1 is determined as DCI #2, DCI of CC 1 of the PMO #2 is determined as DCI #3, and DCI of CC 1 of the PMO #3 is determined as DCI #4. For the CORESET group ID 1, DCI of CC 0 of the PMO #0 is determined as DCI #5, DCI of CC 1 of the PMO #0 is determined as DCI #6, and DCI of CC 1 of the PMO #2 is determined as DCI #7.

In the example, the UE determines DCI (DCI #7) transmitted from the TRP 1 in CC 1 of the slot 2 as the last DCI format. The UE may determine PUCCH resources of the slot 4 based on a PRI of the last DCI format.

Note that, in Embodiment 3-3, the UE may assume that DCI in a specific CORESET group ID includes a PRI field of less than three bits or no PRI field (PRI field of 0 bits). For example, when DCI corresponding to CORESET group ID = X (X > 0) is received, the UE may assume that DCI corresponding to a value of the CORESET group ID of less than X has a PRI field of 0 bits regarding detected DCI corresponding to PUCCH transmission of the same slot as PUCCH transmission of the DCI.

This is because, since the "last DCI format" is selected from a larger COERSET group ID according to Embodiment 3-3, a CORESET group ID, which is less likely to be the last DCI format, causes no problem even if the CORESET group ID has no PRI. When all pieces of DCI corresponding to a larger CORESET group ID are erroneously detected, DCI corresponding to a small CORESET group ID may be the last DCI format. When a plurality of pieces of DCI corresponding to the larger CORESET group ID is transmitted, however, it is highly unlikely that all the pieces of DCI are erroneously detected.

Note that, when DCI having reduced PRI fields is transmitted to the UE regarding a certain CORESET group ID, a base station may perform control of transmitting the predetermined number or more of pieces of DCI, which corresponds to a CORESET group ID larger than the CORESET group ID and gives an instruction of PUCCH transmission of the same slot as the DCI having reduced PRI fields. The control can suitably improve the possibility that UE can receive DCI, which may be selected as the "last DCI format" and corresponds to a larger CORESET group ID. Note that the UE may be notified of information on the predetermined number by higher layer signaling, and the information may be predetermined by a specification.

Therefore, when the indexing of Embodiment 3-3 is adopted, the PRI field, which is always included by three bits in the DCI format 1_0/1_1 in the existing Rel-15 NR, may be reduced in relation to DCI of a specific CORESET group ID. In the case, the error rate of the DCI in which the PRI field is reduced can be improved, and improvement of communication throughput can be expected.

According to the above-described third embodiment, the UE can appropriately determine the "last DCI format" related to PUCCH resource determination.

### <Other Embodiments>

UE may report UE capability information including information related to at least one of the followings to a network:
- Whether or not to support simultaneous reception of a plurality of pieces of DCI (multi-DCI and multi-PDCCHs) (e.g., whether or not to permit detection of two or more DCI formats of plurality of PDCCHs in which first symbol is received in same symbol in same slot);
- Whether or not to support simultaneous reception of a plurality of pieces of DCI that is not in specific QCL relation (e.g., not QCL type D);
- Whether or not to support NCJT of a PDSCH (in other words, simultaneous reception of plurality of PDSCHs (codewords) that is not in the specific QCL relation (e.g., not QCL type D));

- Whether or not to support separate HARQ-ACK;
- Whether or not to support joint HARQ-ACK;
- Whether or not to support a separate HARQ-ACK codebook;
- Whether or not to support a joint HARQ-ACK codebook;
- Whether or not to support single DCI;
- Whether or not to support multi-DCI,
- Whether or not to support subslot-based HARQ feedback;
- Whether or not to support slot-based HARQ feedback;
- The number of pieces of DCI that UE can detect (or decode) in a predetermined PDCCH monitoring period or the same symbol (e.g., OFDM symbol);
- The number of pieces of DCI that are not in the specific QCL relation (e.g., not QCL type D) that UE can detect (or decode) in a predetermined PDCCH monitoring period or the same symbol (e.g., OFDM symbols);
- The number of PDSCHs (or codewords) that UE can detect (or decode) in the same symbol (e.g., OFDM symbol); and
- The number of PDSCHs (or codewords) that are not in the specific QCL relation (e.g., not QCL type D) that UE can detect (or decode) in the same symbol (e.g., OFDM symbol).

When reporting at least one of the above-described UE capabilities, the UE may assume that at least one of the above-described embodiments is applied (or set to be applied). The network may notify the UE that has reported at least one of the above-described UE capabilities of information enabling operation based on at least one of the above-described embodiments.

When one of the joint HARQ-ACK feedback and the joint HARQ-ACK feedback is not set (or not enabled or deactivated), the UE may assume that the other is set (or enabled).

Note that, in the present disclosure, the time resources (e.g., slot) of a PUCCH corresponding to DCI may be determined based on a value of a PDSCH-to-HARQ feedback timing indicator field of the DCI, may be determined based on a value of another field, may be determined based on higher layer signaling, and may be determined based on a specification.

For example, the time resources of a PUCCH corresponding to DCI may be determined based on at least one of a CORESET group ID, DCI (PDCCH), a DMRS (e.g., DMRS sequence and resources) of a PDSCH, and the like. Thus, the "DCI format having a value of a PDSCH-to-HARQ feedback timing indicator field indicating PUCCH transmission of a (certain) slot" in the present disclosure may be replaced with the "DCI format corresponding to PUCCH transmission of a (certain) slot".

Note that large/small, slow/early, and the like in the present disclosure can be replaced individually (e.g., at least one "large" of present disclosure may be replaced with "small").

Note that, in the present disclosure, UE set with a plurality of TRPs may be assumed to determine at least one of a TRP corresponding to DCI, a PDSCH scheduled by the DCI, a TRP corresponding to UL transmission (e.g., PUCCH, PUSCH, and SRS), and the like based on at least one of the followings:
- A value of a predetermined field (e.g., field that designates TRP, antenna port field, and PRI) included in DCI;
- A DMRS (e.g., sequence of DMRS, resources, CDM group, DMRS port, and DMRS port group) corresponding to PDSCH/PUSCH to be scheduled;
- A DMRS (e.g., sequence of DMRS, resources, CDM group, DMRS port, and DMRS port group) corresponding to a PDCCH by which DCI has been transmitted; and
- CORESET (e.g., ID of CORESET, scrambling ID (which may be replaced with sequence ID), and resources) that has received DCI.

In the present disclosure, a single PDCCH (DCI) may be referred to as a PDCCH (DCI) of a first scheduling type (e.g., scheduling type A (or type 1)). Multi-PDCCHs (DCI) may be referred to as a PDCCH (DCI) of a second scheduling type (e.g., scheduling type B (or type 2)).

In the present disclosure, the single PDCCH may be assumed to be supported in the case where multi-TRPs use ideal backhaul. The multi-PDCCHs may be assumed to be supported in the case where the multi-TRPs uses non-ideal backhaul.

Note that the ideal backhaul may be referred to as a DMRS port group type 1, a reference signal related group type 1, an antenna port group type 1, and the like. Note that the non ideal backhaul may be referred to as a DMRS port group type 2, a reference signal related group type 2, an antenna port group type 2, and the like. The name is not limited thereto.

### (Radio Communication System)

The configuration of a radio communication system according to one embodiment of the present disclosure will be described below. In the radio communication system, communication is performed by using one or a combination of the radio communication methods according to the embodiments of the present disclosure.

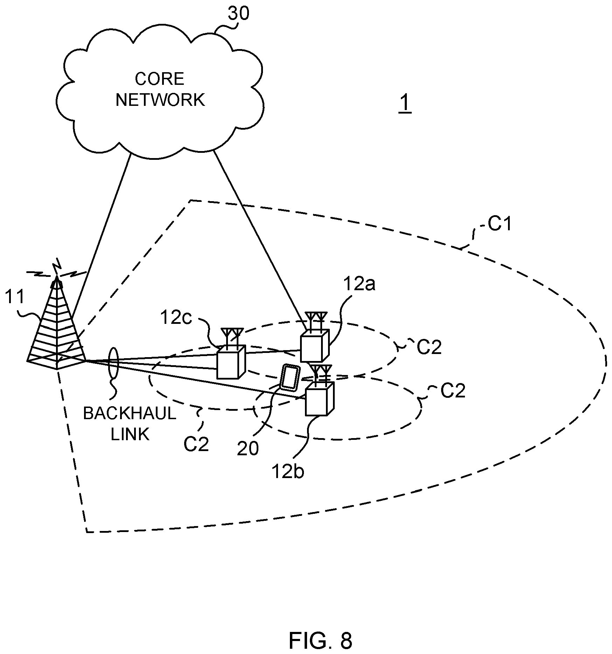

Fig. 8 illustrates one example of a schematic configuration of a radio communication system according to one embodiment. A radio communication system 1 may implement communication by using long term evolution (LTE), 5th generation mobile communication system new radio (5G NR), and the like specified by the third generation partnership project (3GPP).

The radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is an MN, and an LTE (E-UTRA) base station (eNB) is an SN.

The radio communication system 1 may support dual connectivity between a plurality of base stations in the same RAT (e.g., dual connectivity in which both MN and SN are NR base stations (gNB) (NR-NR dual connectivity (NN-DC)).

The radio communication system 1 may include a base station 11 and base stations 12 (12a to 12c). The base station 11 forms a macro cell C1 with a relatively wide coverage. The base stations 12 are disposed in the macro cell C1, and form small cells C2 narrower than the macro cell C1. A user terminal 20 may be located in at least one cell. The arrangement, number, and the like of each cell and the user terminals 20 are not limited to the aspects illustrated in the figure. The base stations 11 and 12 will be collectively referred to as base stations 10 below unless otherwise specified.

The user terminal 20 may be connected to at least one of a plurality of base stations 10. The user terminal 20 may use at least one of carrier aggregation (CA) using a plurality of component carriers (CCs) and dual connectivity (DC) .

Each CC may be included in at least one of a first frequency range 1 (FR1) and a second frequency range 2 (FR2). The macro cell C1 may be included in the FR1, and the small cell C2 may be included in the FR2. For example, the FR1 may be a frequency range of 6 GHz or less (sub-6 GHz), and the FR2 may be a frequency range higher than 24 GHz (above-24 GHz). Note that the frequency ranges, definitions, and the like of the FR1 and the FR2 are not limited thereto, and, for example, the FR1 may correspond to a frequency range higher than the FR2.

The user terminal 20 may perform communication in each CC by using at least one of time division duplex (TDD) and frequency division duplex (FDD).

A plurality of base stations 10 may be connected by wire (e.g., optical fiber or X2 interface compliant with common public radio interface (CPRI)) or wirelessly (e.g., by NR communication). For example, when NR communication is used as backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include at least one of, for example, an evolved packet core (EPC), a 5G core network (5GCN), a next generation core (NGC), and the like.

The user terminal 20 may support at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (e.g., another single carrier transmission method or another multi-carrier transmission method) may be used as UL and DL radio access methods.

In the radio communication system 1, a physical downlink shared channel (PDSCH) shared by user terminals 20, a physical broadcast channel (PBCH), a physical downlink control channel (PDCCH), and the like may be used as a downlink channel.

In the radio communication system 1, a physical uplink shared channel (PUSCH) shared by user terminals 20, a physical uplink control channel (PUCCH), a physical random access channel (PRACH), and the like may be used as an uplink channel.

User data, higher layer control information, a system information block (SIB), and the like are transmitted by a PDSCH. The user data, the higher layer control information, and the like may be transmitted by a PUSCH. A master information block (MIB) may be transmitted by a PBCH.

Lower layer control information may be transmitted by a PDCCH. The lower layer control information may include, for example, downlink control information (DCI) including scheduling information of at least one of the PDSCH and the PUSCH.

Note that DCI that schedules a PDSCH may be referred to as DL assignment, DL DCI, or the like. DCI that schedules a PUSCH may be referred to as UL grant, UL DCI, or the like. Note that the PDSCH may be replaced with DL data, and the PUSCH may be replaced with UL data.

A control resource set (CORESET) and a search space may be used to detect a PDCCH. The CORESET corresponds to resources for searching for DCI. The search space corresponds to a search area and a search method for PDCCH candidates. One CORESET may be associated with one or a plurality of search spaces. The UE may monitor a CORESET associated with a certain search space based on search space settings.

One search space may support a PDCCH candidate at one or a plurality of aggregation levels. One or a plurality of search spaces may be referred to as a search space set. Note that "search space", "search space set", "search space setting", "search space set setting", "CORESET", "CORESET setting", and the like in the present disclosure may be replaced with each other.

Uplink control information (UCI) including at least one of channel state information (CSI), delivery acknowledgement information (e.g., which may be referred to as hybrid automatic repeat request acknowledgement (HARQ-ACK) and ACK/NACK), and a scheduling request (SR) may be transmitted by the PUCCH. A random access preamble for establishing connection with a cell may be transmitted by the PRACH.

Note that, in the present disclosure, downlink, uplink, and the like may be expressed without "link". Various channels may be expressed without "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be at least one of, for example, a primary synchronization signal (PSS) and a secondary synchronization signal (SSS). A signal block including an SS (PSS or SSS) and a PBCH (and DMRS for PBCH) may be referred to as an SS/PBCH block, an SS block (SSB), and the like. Note that the SS, the SSB, and the like may also be referred to as a reference signal.

In the radio communication system 1, a sounding reference signal (SRS), a demodulation reference signal (DMRS), and the like may be transmitted as an uplink reference signal (UL-RS). Note that, the DMRS may be referred to as a "user terminal-specific reference signal (UE-specific reference signal)".

### (Base Station)

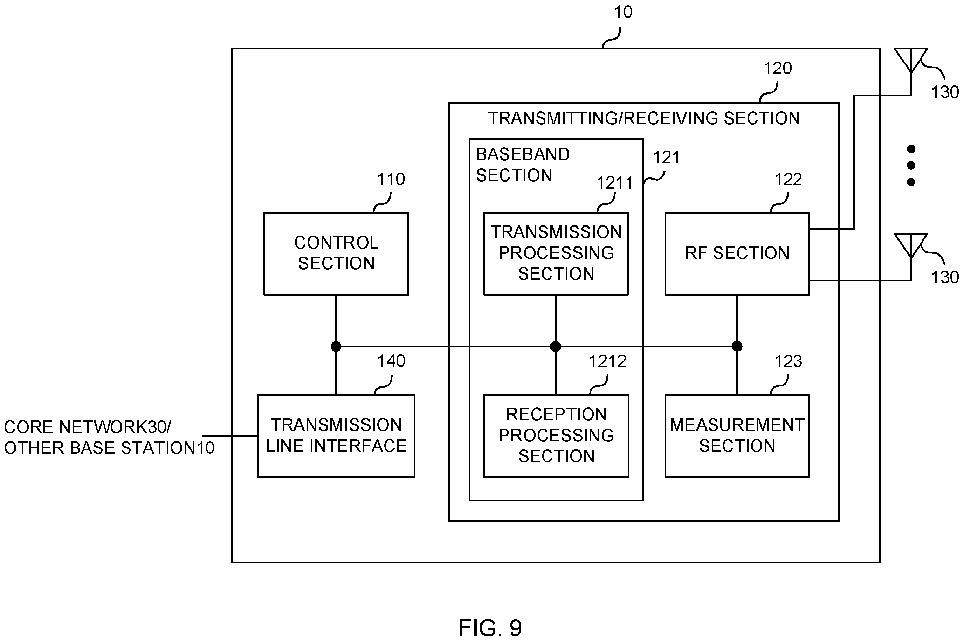

Fig. 9 illustrates one example of the configuration of a base station according to one embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be provided.

Note that the example mainly indicates functional blocks of characteristic parts of the present embodiment. The base station 10 may be assumed to have other functional blocks necessary for radio communication. A part of processing of each unit described below may be omitted.

The control section 110 controls the entire base station 10. The control section 110 can include a controller, a control circuit, and the like, which are described based on common recognition in the technical field according to the present disclosure.

The control section 110 may control signal generation, scheduling (e.g., resource allocation and mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as setting and release) of a communication channel, state management of the base station 10, management of radio resources, and the like.

The transmitting/receiving section 120 may include a baseband unit 121, a radio frequency (RF) unit 122, and a measurement unit 123. The baseband unit 121 may include a transmission processing unit 1211 and a reception processing unit 1212. The transmitting/receiving section 120 can include a transmitter/receiver, an RF circuit, a baseband circuit, a filter, a phase shifter, a measurement circuit, a transmission/reception circuit, and the like, which are described based on common recognition in the technical field according to the present disclosure.

The transmitting/receiving section 120 may be configured as an integrated transmitting/receiving section, or may be configured by a transmitting section and a receiving section. The transmitting section may include the transmission processing unit 1211 and the RF unit 122. The receiving section may include the reception processing unit 1212, the RF unit 122, and the measurement unit 123.

The transmission/reception antenna 130 can include an antenna described based on common recognition in the technical field according to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (e.g., precoding), analog beam forming (e.g., phase rotation), and the like.

The transmitting/receiving section 120 (transmission processing unit 1211) may perform packet data convergence protocol (PDCP) layer processing, radio link control (RLC) layer processing (e.g., RLC retransmission control), medium access control (MAC) layer processing (e.g., HARQ retransmission control), and the like on, for example, data and control information acquired from the control section 110 to generate a bit string to be transmitted.

The transmitting/receiving section 120 (transmission processing unit 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, and digital-analog transform on the bit string to be transmitted to output a baseband signal.

The transmitting/receiving section 120 (RF unit 122) may perform modulation to a radio frequency range, filtering processing, amplification, and the like on the baseband signal, and transmit a signal in the radio frequency range via the transmission/reception antenna 130.

In contrast, the transmitting/receiving section 120 (RF unit 122) may perform amplification, filtering processing, demodulation to a baseband signal, and the like on the signal in the radio frequency range received by the transmission/reception antenna 130.

The transmitting/receiving section 120 (reception processing unit 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, and PDCP layer processing to the acquired baseband signal to acquire user data and the like.

The transmitting/receiving section 120 (measurement unit 123) may perform measurement related to a received signal. For example, the measurement unit 123 may perform radio resource management (RRM) measurement, channel state information (CSI) measurement, and the like based on the received signal. The measurement unit 123 may measure received power (e.g., reference signal received power (RSRP)), received quality (e.g., reference signal received quality (RSRQ), signal to interference plus noise ratio (SINR), and signal to noise ratio (SNR)), signal strength (e.g., received signal strength indicator (RSSI)), propagation path information (e.g., CSI), and the like. The measurement result may be output to the control section 110.

The transmission line interface 140 may transmit/receive (perform backhaul signaling on) a signal to and from an apparatus included in the core network 30, other base stations 10, and the like, and may, for example, acquire and transmit user data (user plane data), control plane data, and the like for the user terminal 20.

Note that the transmitting section and the receiving section of the base station 10 in the present disclosure may include at least one of the transmitting/receiving section 120, the transmission/reception antenna 130, and the transmission line interface 140.

Note that the transmitting/receiving section 120 may transmit a PDSCH to the user terminal 20. The control section 110 may control the PDSCH such that a PDSCH transmitted from another base station 10 and at least one of time resources and frequency resources overlap each other.

### (User Terminal)

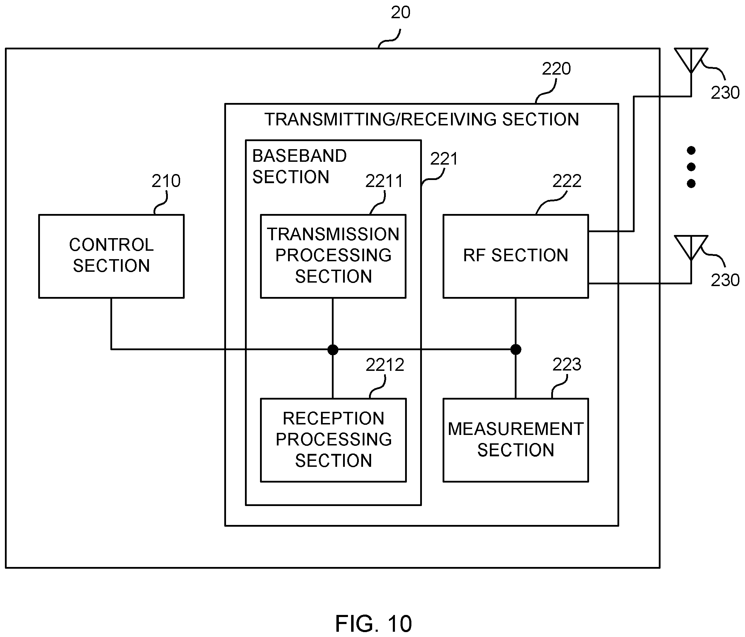

Fig. 10 illustrates one example of the configuration of the user terminal according to one embodiment. The user terminal 20 includes a control section 210, a transmitting/receiving section 220, and a transmission/reception antenna 230. Note that one or more control sections 210, one or more transmitting/receiving sections 220, and one or more transmission/reception antennas 230 may be provided.

Note that the example mainly indicates functional blocks of characteristic parts of the present embodiment. The user terminal 20 may be assumed to have other functional blocks necessary for radio communication. A part of processing of each unit described below may be omitted.

The control section 210 controls the entire user terminal 20. The control section 210 can include a controller, a control circuit, and the like, which are described based on common recognition in the technical field according to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband unit 221, an RF unit 222, and a measurement unit 223. The baseband unit 221 may include a transmission processing unit 2211 and a reception processing unit 2212. The transmitting/receiving section 220 can include a transmitter/receiver, an RF circuit, a baseband circuit, a filter, a phase shifter, a measurement circuit, a transmission/reception circuit, and the like, which are described based on common recognition in the technical field according to the present disclosure.

The transmitting/receiving section 220 may be configured as an integrated transmitting/receiving section, or may include a transmitting section and a receiving section. The transmitting section may include the transmission processing unit 2211 and the RF unit 222. The receiving section may include the reception processing unit 2212, the RF unit 222, and the measurement unit 223.

The transmission/reception antenna 230 can include an antenna described based on common recognition in the technical field according to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (e.g., precoding), analog beam forming (e.g., phase rotation), and the like.

The transmitting/receiving section 220 (transmission processing unit 2211) may perform PDCP layer processing, RLC layer processing (e.g., RLC retransmission control), MAC layer processing (e.g., HARQ retransmission control), and the like on, for example, data, control information, and the like acquired from the control section 210 to generate a bit string to be transmitted.

The transmitting/receiving section 220 (transmission processing unit 2211) may perform transmission processing such as channel encoding (which may include error correction encoding), modulation, mapping, filtering processing, DFT processing (if necessary), IFFT processing, precoding, or digital-analog transform on the bit string to be transmitted to output a baseband signal.

Note that whether or not to apply DFT processing may be determined based on settings of transform precoding. When transform precoding is enabled for a certain channel (e.g., PUSCH), the transmitting/receiving section 220 (transmission processing unit 2211) may perform the DFT processing as the above-described transmission processing in order to transmit the channel by using a DFT-s-OFDM waveform. When this is not the case, the DFT processing is not required to be performed as the above-described transform precoding.

The transmitting/receiving section 220 (RF unit 222) may perform modulation to a radio frequency range, filtering processing, amplification, and the like on a base band signal, and transmit a signal in the radio frequency range via the transmission/reception antenna 230.

In contrast, the transmitting/receiving section 220 (RF unit 222) may perform amplification, filtering processing, demodulation to a base band signal, and the like on the signal in the radio frequency range received by the transmission/reception antenna 230.

The transmitting/receiving section 220 (reception processing unit 2212) may apply reception processing such as analog-digital transform, FFT processing, IDFT processing (if necessary), filtering processing, demapping, demodulation, decoding (which may include error correction decoding), MAC layer processing, RLC layer processing, and PDCP layer processing on the acquired base band signal to acquire user data and the like.

The transmitting/receiving section 220 (measurement unit 223) may perform measurement on a received signal. For example, the measurement unit 223 may perform RRM measurement, CSI measurement, and the like based on the received signal. The measurement unit 223 may measure received power (e.g., RSRP), received quality (e.g., RSRQ, SINR, and SNR), signal strength (e.g., RSSI), propagation path information (e.g., CSI), and the like. The measurement result may be output to the control section 210.

Note that the transmitting section and the receiving section of the user terminal 20 in the present disclosure may include at least one of the transmitting/receiving section 220 and the transmission/reception antenna 230.

Note that the transmitting/receiving section 220 may receive a first physical downlink shared channel (PDSCH) and a second PDSCH. The first PDSCH is transmitted from the first transmission/reception point (TRP). The second PDSCH is transmitted from the second TRP in which the first PDSCH and at least one of time resources and frequency resources overlap each other. That is, the transmitting/receiving section 220 may receive the multi-PDSCHs.

The control section 210 may perform control of transmitting a first hybrid automatic repeat request acknowledgement (HARQ-ACK) to the first PDSCH and second HARQ-ACK to the second PDSCH to one of the first TRP and the second TRP (joint HARQ-ACK).

The control section 210 may determine the last DCI format associated with a specific group index (e.g., which may be at least one of CORESET group ID, PDCCH group index, TRP index, and the like) from detected downlink control information (DCI) formats corresponding to the transmission of an uplink control channel (PUCCH) of the same slot.

The transmitting/receiving section 220 may transmit the uplink control channel by using resources (e.g., PUCCH resources) corresponding to the last DCI format. In the uplink control channel, the joint HARQ-ACK feedback may be performed.

The control section 210 may determine, as the last DCI format, the DCI format corresponding to the largest index in the case where the above-described detected DCI formats (e.g., one or plurality of DCI formats 1_0, 1_1 and the like) are indexed in ascending order over serving cell indices in the same downlink control channel monitoring occasion (PDCCH monitoring occasion (PMO)), and indexed in ascending order over indices of the downlink control channel monitoring occasion.

The control section 210 may determine the last DCI format from a plurality of last DCI formats determined from the detected DCI formats for each group index.

The control section 210 may determine a format of a later corresponding downlink control channel monitoring occasion among the plurality of last DCI formats as the last DCI format.

The control section 210 may determine, as the last DCI format, the DCI format corresponding to the largest index in the case where the above-described detected DCI formats are indexed in ascending order over group indices in the same serving cell index and the same downlink control channel monitoring occasion, indexed in ascending order over serving cell indices in the same downlink control channel monitoring occasion, and further indexed in ascending order over indices of the downlink control channel monitoring occasion.

### (Hardware Configuration)

Note that the block diagrams that have been used to describe the embodiments illustrate blocks in functional units. These functional blocks (configuration units) may be implemented in any combination of at least one of hardware and software. The method of implementing each functional block is not particularly limited. That is, each functional block may be implemented by a physically or logically connected single apparatus, or may be implemented by a plurality of apparatuses obtained by directly or indirectly connecting two or more physically or logically separated apparatuses (e.g., by wire or wirelessly). The functional block may be implemented by combining the above-described single apparatus or the above-described plurality of apparatuses with software.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, assigning, and the like. For example, a functional block (configuration unit) that causes transmission to function may be referred to as a transmitting unit, a transmitter, and the like. In any case, as described above, the implementation method is not particularly limited.

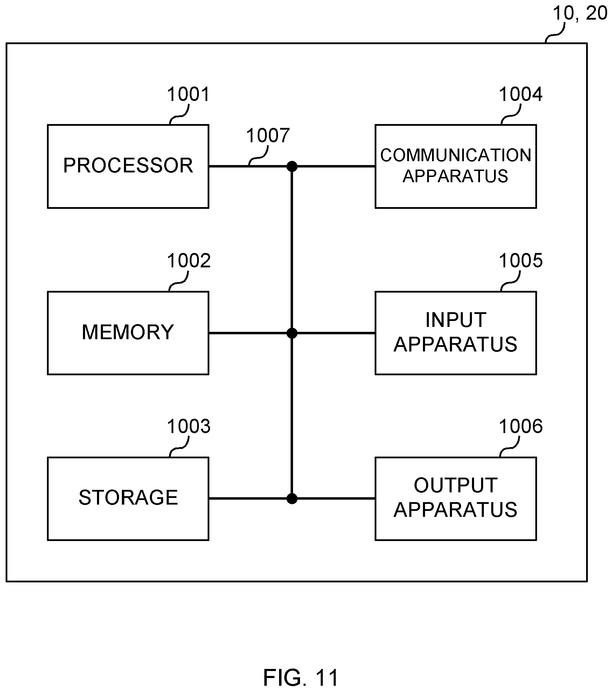

For example, the base station, the user terminal, and the like in one embodiment of the present disclosure may function as a computer that performs the processing of the radio communication method of the present disclosure. Fig. 11 illustrates one example of the hardware configurations of a base station and a user terminal according to one embodiment. The above-described base station 10 and user terminal 20 may be physically configured as a computer apparatus including a processor 1001, a memory 1002, a storage 1003, a communication apparatus 1004, an input apparatus 1005, an output apparatus 1006, a bus 1007, and the like.

Note that, in the present disclosure, the terms such as an apparatus, a circuit, a device, a section, and a unit can be replaced with each other. The base station 10 and the user terminal 20 may have hardware configuration including one or a plurality of apparatuses illustrated in the figure, or may be configured without including some apparatuses.

For example, although only one processor 1001 is illustrated, a plurality of processors may be provided. One processor may execute processing, or two or more processors may execute the processing simultaneously, sequentially, or by using other methods. Note that the processor 1001 may be implemented with one or more chips.

For example, each of functions of the base station 10 and the user terminal 20 is implemented by causing the processor 1001 to perform operation by predetermined software (program) to be read on hardware such as the processor 1001 and the memory 1002, and then controlling communication via the communication apparatus 1004 and controlling at least one of reading and writing of data in the memory 1002 and the storage 1003.

The processor 1001 controls the entire computer by, for example, operating an operating system. The processor 1001 may include a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

The processor 1001 reads a program (program code), a software module, data, and the like from at least one of the storage 1003 and the communication apparatus 1004 to the memory 1002, and executes various pieces of processing in accordance therewith. A program for causing a computer to execute at least a part of the operation described in the above embodiment is used as the program. For example, the control section 110 (210) may be implemented by a control program that is stored in the memory 1002 and operates in the processor 1001, and other functional blocks may be implemented similarly.

The memory 1002 is a computer-readable recording medium, and may include at least one of, for example, a read only memory (ROM), an erasable programmable ROM (EPROM), an electrically EPROM (EEPROM), a random access memory (RAM) and other appropriate storage media. The memory 1002 may be referred to as a register, a cache, a main memory (main storage apparatus), and the like. The memory 1002 can store a program (program code) executable for implementing the radio communication method according to one embodiment of the present disclosure, a software module, and the like.

The storage 1003 is a computer-readable recording medium, and may include at least one of, for example, a flexible disk, a floppy (registered trademark) disk, a magneto-optical disk (e.g., compact disc (e.g., compact disc ROM (CD-ROM)), digital versatile disc, and Blu-ray (registered trademark) disk), a removable disk, a hard disk drive, a smart card, a flash memory device (e.g., card, stick, and key drive), a magnetic stripe, a database, a server, and other appropriate storage media. The storage 1003 may be referred to as an auxiliary storage apparatus.

The communication apparatus 1004 is hardware (transmission/reception device) for performing intercomputer communication via at least one of a wired network and a wireless network, and is referred to as, for example, a network device, a network controller, a network card, a communication module, and the like. The communication apparatus 1004 may include a high frequency switch, a duplexer, a filter, a frequency synthesizer, and the like in order to achieve at least one of, for example, frequency division duplex (FDD) and time division duplex (TDD). For example, the communication apparatus 1004 may implement the above-described transmitting/receiving section 120 (220), transmission/reception antenna 130 (230), and the like. The transmitting/receiving section 120 (220) may be implemented in a physically or logically separated manner by a transmitting section 120a (220a) and a receiving section 120b (220b).

The input apparatus 1005 is an input device for receiving input from the outside (e.g., keyboard, mouse, microphone, switch, button, and sensor). The output apparatus 1006 is an output device for performing output to the outside (e.g., display, speaker, and light emitting diode (LED) lamp). Note that the input apparatus 1005 and the output apparatus 1006 may be provided in an integrated configuration (e.g., touch panel).

The apparatuses such as the processor 1001 and the memory 1002 are connected by the bus 1007 for communicating information. The bus 1007 may include a single bus, or include buses different for each apparatus.

The base station 10 and the user terminal 20 may include hardware such as a microprocessor, a digital signal processor (DSP), an application specific integrated circuit (ASIC), a programmable logic device (PLD), and a field programmable gate array (FPGA), and some or all of the functional blocks may be implemented by the hardware. For example, the processor 1001 may be implemented by using at least one of these pieces of hardware.

### (Variations)

Note that terms described in the present disclosure and terms necessary for understanding the present disclosure may be replaced with terms that have the same or similar meaning. For example, a channel, a symbol, and a signal (or signaling) may be replaced with each other. The signal may be a message. A reference signal can be abbreviated as an RS, and may be referred to as a pilot, a pilot signal, and the like depending on a standard applied. The component carrier (CC) may be referred to as a cell, a frequency carrier, a carrier frequency, and the like.

A radio frame may include one or a plurality of periods (frames) in a time domain. One or a plurality of periods (frames) constituting the radio frame may be referred to as a subframe. The subframe may include one or a plurality of slots in the time domain. The subframe may be a fixed time length (e.g., 1 ms) that does not depend on numerology.

Here, the numerology may be a communication parameter applied to at least one of transmission and reception of a certain signal or channel. The numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, and specific windowing processing performed by the transceiver in a time domain.

The slot may include one or a plurality of symbols in the time domain (e.g., orthogonal frequency division multiplexing (OFDM) symbol and single carrier frequency division multiple access (SC-FDMA) symbols). The slot may be a time unit based on the numerology.

The slot may include a plurality of mini slots. Each mini slot may include one or a plurality of symbols in the time domain. The mini slot may be referred to as a subslot. Each mini slot may include the fewer number of symbols than a slot. A PDSCH (or PUSCH) transmitted in a time unit larger than a mini slot may be referred to as a PDSCH (PUSCH) mapping type A. A PDSCH (or PUSCH) transmitted by using a mini slot may be referred to as a PDSCH (PUSCH) mapping type B.

All of a radio frame, a subframe, a slot, a mini slot, and a symbol represent a time unit in signal transmission. The radio frame, the subframe, the slot, the mini slot, and the symbol may be called by other applicable names corresponding thereto. Note that time units such as a frame, a subframe, a slot, a mini slot, and a symbol in the present disclosure may be replaced with each other.

For example, one subframe may be referred to as a TTI. A plurality of sequential subframes may be referred to as a TTI. One slot or one mini slot may be referred to as a TTI. That is, at least one of a subframe and a TTI may be a subframe (1 ms) in the existing LTE, may be a period shorter than 1 ms (e.g., one to thirteen symbols), or may be a period longer than 1 ms. Note that a unit to represent the TTI may be referred to as a slot, a mini slot, and the like, instead of a subframe.

Here, a TTI refers to the minimum time unit of scheduling in radio communication, for example. For example, in an LTE system, a base station performs scheduling of allocating radio resources (e.g., frequency bandwidth and transmission power that can be used in each user terminal) to each user terminal in TTI units. Note that the definition of a TTI is not limited thereto.

The TTI may be a transmission time unit of a channel-encoded data packet (transport block), a code block, a codeword, and the like, or may be a processing unit of scheduling, link adaptation, and the like. Note that, when a TTI is given, a time interval (e.g., symbol number) to which the transport block, the code block, the codeword, and the like are actually mapped may be shorter than the

### TTI.

Note that, when one slot or one mini slot is referred to as a TTI, one or more TTIs (i.e., one or more slots or one or more mini slots) may be the minimum time unit of scheduling. The number of slots (the number of mini slots) constituting the minimum time unit of scheduling may be controlled.

A TTI having a time length of 1 ms may be referred to as a usual TTI (TTI in 3GPP Rel. 8-12), a normal TTI, a long TTI, a usual subframe, a normal subframe, a long subframe, a slot, and the like. A TTI shorter than the usual TTI may be referred to as a shortened TTI, a short TTI, a partial TTI (or fractional TTI), a shortened subframe, a short subframe, a mini slot, a subslot, a slot, and the like.

Note that the long TTI (e.g., usual TTI and subframe) may be replaced with a TTI having a time length exceeding 1 ms, and a short TTI (e.g., shortened TTI) may be replaced with a TTI having a TTI length less than the TTI length of the long TTI and not less than 1 ms.

A resource block (RB) is a resource allocation unit in a time domain and a frequency domain, and may include one or a plurality of sequential subcarriers in the frequency domain. The same number of subcarriers may be included in the RB regardless of the numerology. For example, 12 subcarriers may be included in the RB. The number of subcarriers included in the RB may be determined based on the numerology.

The RB may include one or a plurality of symbols in the time domain, and may have a length of one slot, one mini slot, one subframe, or one TTI. Each of one TTI, one subframe, and the like may include one or a plurality of resource blocks.

Note that one or a plurality of RBs may be referred to as physical resource blocks (physical RBs (PRBs)), a sub-carrier group (SCG), a resource element group (REG), a PRB pair, an RB pair, or the like.

The resource block may include one or a plurality of resource elements (REs). For example, one RE may be a radio resource field of one subcarrier and one symbol.

A bandwidth part (BWP) (which may be referred to as partial bandwidth or the like) may represent a subset of sequential common resource blocks (RBs) for a certain numerology in a certain carrier. Here, the common RB may be identified by an index of an RB with reference to a common reference point of the carrier. The PRB may be defined by a certain BWP, and numbered in the BWP.

The BWP may include a BWP for UL (UL BWP) and a BWP for DL (DL BWP). One or a plurality of BWPs may be set for UE in one carrier.

At least one of the set BWPs may be active. The UE is not required to transmit/receive a predetermined signal/channel outside the active BWP. Note that the "cell", the "carrier", and the like in the present disclosure may be replaced with the "BWP".

Note that the structures of the above-described radio frame, subframe, slot, mini slot, symbol, and the like are merely examples. For example, the configurations of the number of subframes included in a radio frame, the number of slots per subframe or radio frame, the number of mini slots included in a slot, the number of symbols and RBs included in a slot or a mini slot, the number of subcarriers included in an RB, the symbol number in a TTI, the symbol length, the cyclic prefix (CP) length, and the like can be variously changed.

The information, parameters, and the like described in the present disclosure may be represented by using absolute values, relative values from predetermined values, or other corresponding information. For example, radio resources may be indicated by a predetermined index.

The names used for parameters and the like in the present disclosure are in no respect limiting. Mathematical expressions and the like that use these parameters may differ from those explicitly disclosed in the present disclosure. Since various channels (e.g., PUCCH and PDCCH) and information elements can be identified by any suitable names, various names assigned to these various channels and information elements are in no respect limiting.

The information, signals, and the like described in the present disclosure may be represented by using any of various different technologies. For example, data, instructions, commands, information, signals, bits, symbols and chips which can be referenced throughout the above entire description may be represented by voltages, currents, electromagnetic waves, magnetic fields, magnetic particles, optical fields, photons, or any combination thereof.

The information, signals, and the like can be output in at least one of a direction from a higher layer to a lower layer and a direction from a lower layer to a higher layer. The information, signals, and the like may be input/output via a plurality of network nodes.

The information, signals, and the like that have been input/output may be stored in a specific location (e.g., memory), or may be managed by using a management table. The information, signals, and the like to be input/output can be overwritten and updated, or can receive a postscript. The information, signals, and the like that have been input/output may be deleted. The information, signals, and the like that have been input/output may be transmitted to another apparatus.

Notification of information may be performed not only in the aspects/embodiments described in the present disclosure but by using another method. For example, notification of information in the present disclosure may be performed by using physical layer signaling (e.g., downlink control information (DCI) and uplink control information (UCI)), higher layer signaling (e.g., radio resource control (RRC) signaling, broadcast information (e.g., master information block (MIB), and system information block (SIB)), medium access control (MAC) signaling), another signal, or a combination thereof.

Note that the physical layer signaling may be referred to as layer 1/layer 2 (L1/L2) control information (L1/L2 control signal), L1 control information (L1 control signal), or the like. The RRC signaling may be referred to as an RRC message, and may be, for example, an RRC connection setup message, an RRC connection reconfiguration message, and the like. Notification of the MAC signaling may be performed by using, for example, a MAC control element (MAC control element (CE).

Notification of predetermined information (e.g., notification of "being X") may be performed not only explicitly by implicitly (e.g., by not performing notification of predetermined information or performing other information).

Judging may be performed by a value (0 or 1) represented by one bit, a Boolean value represented by true or false, or comparison of numerical values (e.g., comparison with predetermined value).

Regardless of whether or not being referred to as software, firmware, middleware, a microcode, a hardware description language, or other names, software should be widely interpreted so as to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, instructions, information, and the like may be transmitted/received via a transmission medium. For example, when the software is transmitted from a website, a server, or another remote source by using at least one of wired technology (e.g., coaxial cable, optical fiber cable, twisted pair, and digital subscriber line (DSL)) and wireless technology (e.g., infrared rays and microwaves), at least one of the wired technology and the wireless technology is included in the definition of the transmission medium.

The terms "system" and "network" used in the present disclosure can be used interchangeably. The "network" may mean an apparatus (e.g., base station) included in the network.

In the present disclosure, the terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "layer number", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" can be interchangeably used. The base station may be referred to by a term such as a macro cell, a small cell, a femto cell, and a pico cell.

The base station can accommodate one or a plurality of (e.g., three) cells. When a base station accommodates a plurality of cells, the entire coverage area of the base station can be partitioned into a plurality of smaller areas, and each smaller area can provide communication service through a base station subsystem (e.g., indoor small base station (remote radio head (RRH))). The term "cell" or "sector" refers to a part or the whole of a coverage area of at least one of a base station and a base station subsystem that perform communication service in the coverage.

In the present disclosure, the terms such as "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, and a client, or by another appropriate term.

At least one of the base station and the mobile station may be referred to as a transmission apparatus, a reception apparatus, a radio communication apparatus, and the like. Note that at least one of the base station and the mobile station may be a device mounted in a moving object, the moving object itself, and the like. The moving object may be a transportation (e.g., car and airplane), an unmanned moving object (e.g., drone and autonomous car), or a (manned or unmanned) robot. Note that at least one of the base station and the mobile station also includes an apparatus that does not necessarily move during communication operation. For example, at least one of the base station and the mobile station may be an Internet of Things (IoT) device such as a sensor.

The base station in the present disclosure may be replaced with a user terminal. For example, each aspect/embodiment of the present disclosure may be applied to a configuration in which communication between a base station and a user terminal is replaced with communication among a plurality of user terminals (e.g., which may be referred to as device-to-device (D2D) and vehicle-to-everything (V2X)). In the case, the user terminal 20 may have the function of the above-described base station 10. The terms "uplink" and "downlink" may be replaced with terms corresponding to inter-terminal communication (e.g., "side"). For example, an uplink channel, a downlink channel, and the like may be replaced with a side channel.

Similarly, the user terminal in the present disclosure may be replaced with a base station. In the case, the base station 10 may have the function of the above-described user terminal 20

In the present disclosure, the operation performed by a base station may be performed by an upper node thereof in some cases. In a network including one or a plurality of network nodes having a base station, it is clear that various operations performed for communication with a terminal can be performed by a base station, one or more network nodes other than the base station (e.g., mobility management entity (MME) and serving-gateway (S-GW) can be considered, but are not limiting), or a combination thereof.

Each aspect/embodiment described in the present disclosure may be used independently, in combination, or by being switched along with execution. The order of processing procedure, sequence, flowchart, and the like of each aspect/embodiment described in the present disclosure may be changed as long as there is no inconsistency. For example, various step elements in the methods described in the present disclosure are presented by using illustrative orders, and the methods are not limited to the presented orders.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new-radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate radio communication methods, a next generation system expanded based thereon, and the like. A plurality of systems may be combined (e.g., combination of LTE or LTE-A and 5G) and applied.

The phrase "based on" used in the present disclosure does not mean "based only on", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure as a convenient method of distinguishing two or more elements. Thus, reference to the first and second elements does not mean that only two elements can be adopted or that the first element must precede the second element in some way.

The term "deciding (determining)" used in the present disclosure may include a wide variety of operations. For example, "deciding (determining)" may be regarded as "deciding (determining)" judging, calculating, computing, processing, deriving, investigating, looking up, search, inquiry (e.g., looking up in table, database, or another data structure), ascertaining, and the like.

"Deciding (determining)" may be regarded as "deciding (determining)" receiving (e.g., receiving information), transmitting (e.g., transmitting information), input, output, accessing (e.g., accessing data in memory), and the like.

"Deciding (determining)" may be regarded as "deciding (determining)" resolving, selecting, choosing, establishing, comparing, and the like. That is, "deciding (determining)" may be regarded as "deciding (determining)" some operation.

"Deciding (determining)" may be replaced with "assuming", "expecting", "considering", and the like.

The terms "connected" and "coupled", or any variation thereof used in the present disclosure may mean that two or more elements are directly or indirectly connected or coupled, and can include the existence of one or more intermediate elements between two elements "connected" or "coupled" with each other. Elements may be coupled or connected physically, logically, or in combination thereof. For example, "connection" may be replaced with "access".

In the present disclosure, when two elements are connected, it can be considered that the two elements are "connected" or "coupled" with each other by using one or more electrical wires, cables, printed electrical connection, and the like and using, as some non-limiting and non-inclusive examples, electromagnetic energy having a wavelength in a radio frequency domain, a microwave domain, and a (both visible and invisible) light domain, and the like.

In the present disclosure, the phrase "A and B are different" may mean that "A and B are different from each other". Note that the phrase may mean that "A and B are different from C". The terms such as "leave", "coupled", and the like may be interpreted similarly to "different".

When the terms such as "include", "including", and variations thereof are used in the present disclosure, these terms are intended to be inclusive similarly to the term "comprising". The term "or" used in the present disclosure is intended not to be exclusive-OR.

In the present disclosure, for example, when an article in English, such as a, an, and the, is added in translation, the present disclosure may include that the noun that follows these articles is in the plural form.

Although the invention according to the present disclosure has been described in detail above, it is obvious to a person skilled in the art that the invention according to the present disclosure is not limited to the embodiments described in the present disclosure. The invention according to the present disclosure can be embodied as a modification and an alternation without departing from the spirit and scope of the invention defined based on the description of claims. Therefore, the description in the present disclosure is provided for the purpose of illustration, and does not give any limiting meaning to the invention according to the present disclosure.

## Claims

1. A terminal comprising:
a control section that determines a last DCI format associated with a specific group index from detected downlink control information (DCI) formats corresponding to transmission of an uplink control channel of a same slot; and
a transmitting section that transmits the uplink control channel by using a resource corresponding to the last DCI format.

2. The terminal according to claim 1, wherein the control section determines, as the last DCI format, a DCI format corresponding to a largest index in a case where the detected DCI formats are indexed in ascending order over serving cell indices in a same downlink control channel monitoring occasion, and indexed in ascending order over indices of the downlink control channel monitoring occasion.

3. The terminal according to claim 1, wherein the control section determines the last DCI format from a plurality of last DCI formats determined from the detected DCI formats for each group index.

4. The terminal according to claim 3, wherein the control section determines a format of a later corresponding downlink control channel monitoring occasion among the plurality of last DCI formats as the last DCI format.

5. The terminal according to claim 1, wherein the control section determines, as the last DCI format, a DCI format corresponding to a largest index in a case where the detected DCI formats are indexed in ascending order over group indices in a same serving cell index and a same downlink control channel monitoring occasion, indexed in ascending order over serving cell indices in a same downlink control channel monitoring occasion, and further indexed in ascending order over indices of the downlink control channel monitoring occasion.

6. A radio communication method of a terminal, comprising the steps of:
determining a last DCI format associated with a specific group index from detected downlink control information (DCI) formats corresponding to transmission of an uplink control channel of a same slot; and
transmitting the uplink control channel by using a resource corresponding to the last DCI format.
